# EUROPEAN PATENT SPECIFICATION

(11) **EP 1 194 739 B1**
(45) Date of publication and mention of the grant of the patent: **19.09.2007**
(21) Application number: 00946634.3
(22) Date of filing: 22.06.2000
(51) Int. Cl.: G01C 21/20, G08G 1/0969, G01C 21/36

(54) **Mobile navigation system**
Mobiles Navigationssystem
Système de navigation mobile

(30) Priority: 24.06.1999 SE 9902418
(43) Date of publication of application: 10.04.2002
(73) Proprietor: TELIA AB, 123 86 Farsta (SE)
(72) Inventor: CHRISTIANSSON, Jonas, S-973 33 Lulea (SE); ISAKSSON, Lars-Ake, S-954 35 Gammelstad (SE); KERO, Roland, S-972 38 Lulea (SE); MELANDER, Henrik, S-943 33 Öjebyn (SE); PARASNIS, Amalendu, S-972 53 Lulea (SE); ROSELL, Peter, S-431 38 MÖLNDAL (SE); SIKSTRÖM, Andreas, S-974 51 Lulea (SE)
(74) Representative: Hopfgarten, Nils
(86) International application number: PCT/SE2000/001339
(87) International publication number: WO 2001/001077

(56) References cited:
- EP-A2- 0 829 704
- WO-A1-97/07467
- WO-A2-98/59506
- NOBUTSUGU FUJINO ET AL.: 'Mobile information service based on multi-agent architecture' IEICE TRANS. COMMUN. vol. E80-B, no. 10, October 1997, pages 1401 - 1406, XP002931502
- DATABASE WPI Week 199835, Derwent Publications Ltd., London, GB; AN 1998-402959, XP002965643 & JP 10 161 534 A (MATSUSHITA ELECTRIC IND CO LTD) 19 June 1998 & PATENT ABSTRACTS OF JAPAN & JP 10 161 534 A (MATSUSHITA DENKI SANGYO KK) 19 June 1998

## Description

### TECHNICAL FIELD

The present invention relates to, at a wireless communications system, from a service server continuously update position data and data relating to information objects related to the geographical district of current interest. Position data and information objects are preferably shown on a map on a display unit at a mobile terminal.

The information objects include, in addition to geo-code for the navigation points, which indicate where on the map the object shall be shown, also information about a formalised image, an icon, which shall symbolise an information object and be shown on the map. If the icon is to be derived from a computer network, address of the icon is specified. The information object can also include a reference to supplementing information relating to the information point.

### PRIOR ART

There are web-based navigation services where the user enters, for instance, two addresses into the system and gets back a table with navigation points or other coordinates together with written instructions. The table together with the instructions shows a recommended route between the indicated addresses.

In the table below, an example is shown from such a navigation service, where a recommended route from ARLANDA airport to ÖSTGÖTAGATAN at Södermalm in Stockholm is shown:

**Table 1**

| **At (km)** | **Turn** | **To** |
|---|---|---|
| 0,0 | L | UTFART (EXIT) |
| 0,6 | R | Arlandaleden (road 273) (fairway) |
| 4,5 | V | Påfart (Intersection approach) E4 > Stockholm |
| 5,3 | | E4 (Uppsalavägen) (road) |
| 37,2 | | E4 (Eugeniakopplet) |
| 38,0 | | E4 (Norra Länken) (link) |
| 38,4 | | Avfart (Intersection exit) -> Centrum |
| 38.9 | | Klarastrandsleden (fairway) |
| 40,8 | | Blekholmsfaret (subweay) |
| 41,2 | L | Centralbron (bridge) |
| 42,7 | | Söderledstunneln (tunnel) |
| 43,2 | | Avfart (Intersection exit > MEDBORGARPLATSEN |
| 43,5 | L | Folkungagatan (street) |
| 43,6 | R | Götgatan (street) |
| 44,3 | L | Ölandsgatan (street) |
| 44,4 | L | Östgötagatan (street) |

There also exist navigation aids in form of CDs or diskettes that can be used in, for instance, vehicles, but there do not exist any public mobile services that, while travelling, can facilitate for the user to navigate by means of a mobile terminal.

Neither do there exist any services or technologies that make graphical and position adapted navigation support for mobile clients possible via a network for mobile communication.

EP-A2-0 829 704 discloses a navigation system comprising an information display equipment indicating information received via a communication system, an information offering equipment obtaining information from an information offering server via Internet and transmitting the obtained information to the information display equipment, and a communication equipment. The navigation system determines and updates a recommended route which is displayed on a map in the information display equipment. Together with the map and route, icons are displayed to positions where the information provided from the information offering equipment is stored.

WO 97 07467 A1 describes a computer system for the Internet for identifying local resources, which uses a computer to access a map server and an information server to display the location of a place of interest. The map of the place is requested from a map server and the information, relating to the place of interest, is requested from an information server by the computer.

### TECHNICAL PROBLEM

Navigation aids, which are indented to provide aid for an efficient selection of route, provide a considerably better support if they can be used while travelling. Access to navigation support while travelling can be useful, for instance, if there is need to re-plan a route, or if it should turn out while travelling that another route is of interest. In such situations, it is essential that the navigation support is mobile. With the navigation aids that are available today, it is necessary that the traveller breaks the journey in order to elsewhere get necessary aid for the navigation.

In addition to the position information, one often also need map information for planning of route. One problem then is to relate the position information to the map if the position information only is obtained in form of a list.

Together with the geographical position information one may also need information about phenomena along the route, such as information about road conditions, petrol stations, restaurants etc.

### TECHNICAL SOLUTION

In order to over come the above-mentioned problems, a navigation aid according to claim 1 is provided.

The invention describes a navigation list, a table that contains instructions for navigation. The table is generated, in addition to columns with information explicitly for navigation, also columns including geo-coded information objects for each navigation instruction. The information objects include geo-codes for the navigation points and a symbol, an icon. The navigation list can be used together with a device, which on client equipment shows a map, in which case the icons are shown on the map. The icons can be clicked on, and refer to web pages on Internet or other connected communication network. The content of the page is derived by ordinary HTTP-protocol if Internet is utilised.

In order to limit the need for storing and transmission, the icon is not transmitted, but instead an address to a storing place or in a computer network, for instance a web address, to a place at Internet where the icon is accessible. The icons therefore can be located anywhere - locally or in a computer network - and can be owned by anybody (for instance a restaurant, bank, private person or the like).

The transmitted information can also include an address, for instance web address, which refers to a place where information regarding the navigation points is accessible. In that way the icon can constitute a cursor for a pointer, for instance if Internet is utilised, the icons can be possible to click on and refer to web pages. The content of the page is then derived by ordinary http-protocol.

The generated table is transmitted to the client, which stores information and shows the navigation points/icons on the client's display unit. The information on the display unit can suitably be shown together with a map where new maps are loaded to the client as the user is moving.

A technical embodiment of a system that utilises the invention includes terminal/client (33), a service node (34) in capacity of a server that handles a database. The terminal includes data communication functions (possibly mobile), display unit. If a map shall be shown on the display unit, and the position of current interest is shown on the map, the terminal should also be equipped with positioning system (for instance GPS). Icons (32) for the information objects are accessible on a communications network, for instance Internet. Information (35) associated to the information objects can also be derived from the same or another communications network.

### ADVANTAGES

The information in the points can be kept up-to-date by the database only containing one pointer to the information proper, which is stored on, for instance, a web page. These pointers are handled centrally by the service provider, and contain a small amount of data, so the maintenance of the pointers can be quickly performed and with high reliability, since only one party attends to the information.

The information pages that the pointers refer to, and which the service provider provide, can be kept up-to-date by being centrally updated. The pointer also can refer to information locations that others than the service provider are responsible for. In such cases the information can be expected to be kept up-to-date by the one who provides the information; the information provider is interested in that correct information is distributed.

The transmission to the clients does not require large bandwidth, since a limited amount of data is transmitted initially by only pointers, for instance web addresses, being transmitted. The client then can selectively choose which information that shall be loaded. By that it will be possible to utilise narrow-band, for instance mobile, communication, for instance mobile telephone, for the transmission.

A solution according to the invention is technically easy to handle since:
- only standard components are required for the user equipment: Communication possibility with wire-connected telephone, or mobile telephone, such as GSM, simple computer and access to Internet, or a corresponding communications network.
- the service is easy to use - load a program and the service is accessible.
- all included units communicate via an open communications network, such as Internet, by a universally accessible protocol, such as TCP/IP, which makes it easy to distribute the system.
- the utilisation of an open computer network makes it easy to rescale the system for more or fewer users, and to extend the system with different geographical districts as the market and needs are changing.
- operation, maintenance and further development of the service is facilitated by updating/upgrading and other changes only being needed to perform in one place.

### LIST OF FIGURES

Figure 1 shows a thin database optimised for mobile information services.
Figure 2 shows how map with icons is shown to the user.

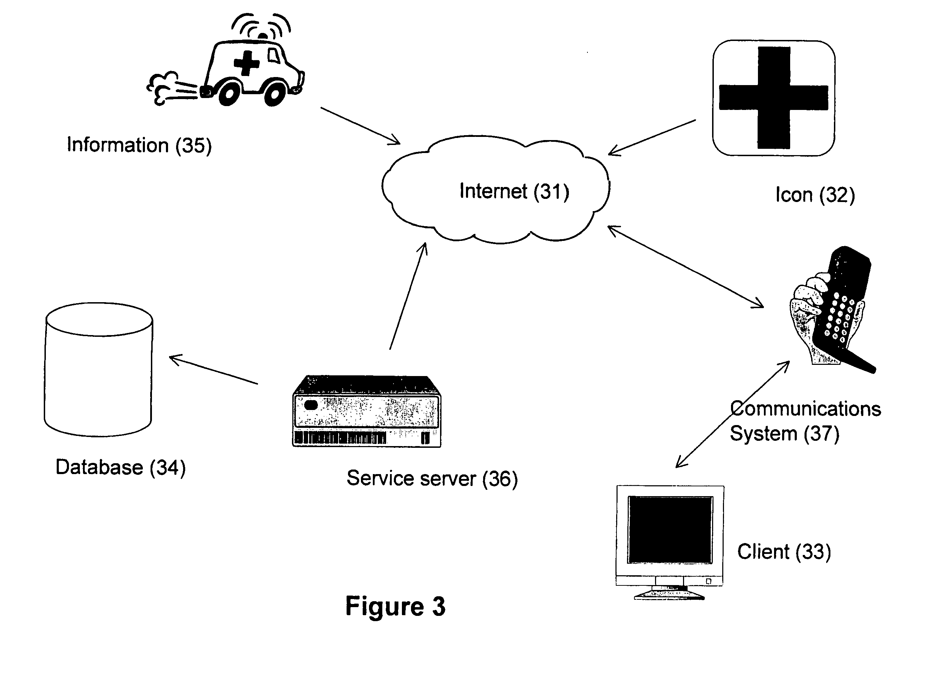

Figure 3 shows a technical embodiment of a system that utilises the invention.

### EXPLANATION OF TERMS

| | |
|---|---|
| auto-active icon | Icon, which is so arranged that the client automatically derives the to the icon associated information when certain criteria are fulfilled, for instance that the client is coming within a certain distance from the object. |
| geo-code | A way to present coordinates for showing of objects on a map. |
| GPS | Global Positioning System |
| GSM | Global System for Mobile Communication Cellular mobile telephone system. |
| HTTP | Hyper Text Transfer Protocol |
| Information object | Object to which is associated information that is handled in an information database. Examples of information objects: Restaurants, roadwork, navigation information, cash dispensers etc. |
| IF | Internet Protocol Protocol that is used in Internet. |
| TCP | Transmission Communication Protocol |

### DETAILED DESCRIPTION

The description below refers to the figures of the enclosed drawings.

### Preferred embodiment

A navigation list can be described as a table with navigation instructions, instructions for how to select route at all points of selection. The list deals with how to select route alternative at different points of the route to, in the easiest way, reach the goal. The here described invention constitutes an improvement of such a navigation list by the list being supplemented with information objects, i.e. objects that can be of interest to the traveller who is utilising the navigation list. Examples of navigation objects can be restaurants, roadwork, navigation information, cash dispensers, department stores, things worth seeing, and motor road junctions, etc.

In said table is then generated, in addition to columns with information explicitly for the navigation, also columns with information objects. The information objects include, in addition to information about their geographical coordinates, geo-codes, also a symbol, an icon, which shall be shown together with the information object. In that way navigation information and information objects can be shown at the same time on a map.

In order to limit the storing and transmission need, the icon that is associated with the information object is not transmitted, but instead an address to a storing place, for instance a web address to a place on Internet where the icon is accessible. The icons therefore can be located anywhere, and can be owned by anybody (for instance restaurant, cash dispenser, private person etc). In the table can also be shown an address to information related to the navigation point. If the information shall be derived via Internet, this address information is a web address where an interested party has stored information about the information object, for instance information about a restaurant, shop, or alternative route.

The information object may just as well relate to, for instance, a public authority, at which the information can apply to road conditions, or traffic alerts, or opening hours for the municipal office. Other alternatives are that private persons are given chances to provide information via information objects. If the information object also can be shown selectively to individuals, or groups, the possibility can be a vigorous aid to distribute local and time-bound information in connection with meetings and other larger or smaller arrangements.

The generated table, i.e. the navigation list including the geo-coded information objects, is transmitted direct to the client, which stores received data. The information then is shown on the client's display unit.

Below is an example of what the table that is transmitted to the client may look like.

**Table 2**

| **Distance** | **Measure** | **Route indication** | **Geocode** | **Type of Icon** | **Information address** |
|---|---|---|---|---|---|
| 0,0 | Left | EXIT | X=654.. | ICON#2. | http://www.nav. |
| | | | Y=715.. | | telia.se/x654../ |
| 0,6 | Right | Arlanda | X=653.. | ICON#4 | http://www.nav. |
| | | Route 273 | Y=714.. | | telia.se/x654.. |

The navigation list with the geo-coded information objects that are transmitted to the client consists of only one text string, which informs about which icon that shall be used, from where the icon shall be derived (locally from the client's internal library, or from a computer network, for instance by http from Internet), and where the icon shall be shown on the map. Since the transmitted amount of data is limited, the transmission time, also over medium with limited bandwidth, as mobile telephone, will be very short.

If auto-active icons, i.e. icons that under certain circumstances initiate the client to derive certain information, are activated, is made possible that the client's display unit automatically shows information regarding the navigation point. The information is derived by means of the address that is in the navigation list.

### Database

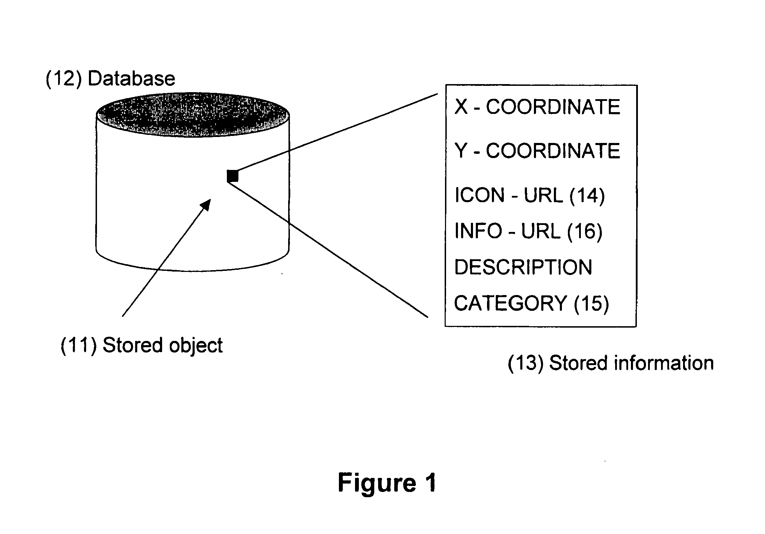

In order to, at the service provider, create a navigation service according to the invention, a thin database is built, which only contains geo-code for information object, addresses for both information pages of content suppliers, and their associated icons, as well as denomination and type of category for respective information object. The icons, which are derived via a computer network, show type of category, and the physical location of content providers on the map at the client. See Figure 1, which shows the database (12), an example of a line in the navigation table (11), and the stored information (13). Table 3 shows an example of stored data for a line in the navigation table.

**Table 3**

| **Data field** | **Stored data** |
|---|---|
| X-coordinate | 6580837 |
| Y-coordinate | 1628671 |
| Address to icon | http://www.sterikssjukhus.se/ sjukhus_icon.jpg |
| Address to information about information object | http://www.sterikssjukhus.se/ S:t_Erik_index.html |
| Describing text | S:t Eriks Sjukhus (hospital) |
| Category | Sjukhus (hospital) |

The figure shows an example of an information object of the category "Hospital" (Sjukhus) (S:t Eriks sjukhus/S:t Eric's Hospital). The x- and y-coordinates indicate the physical position of the information object, i.e. the geographical position of the hospital. The address to the icon of the information object and the information page are specified by web addresses.

The information database in this way will be easy to handle, because the amount of data per information object is very small, since the major part of the information is derived by the client from the content provider's server by means of the stored address.

By the content provider, who often is information owner of the shown information, managing the vital (delicate) information himself/herself, the security issues will have a simple management. No secret information need to be handled by a service provider, and the information owner himself/herself attends to the correctness.

The information database is thin, i.e. it only holds geo-code for information objects and belonging addresses to content providers. This means that data that are transmitted to the client will take up small space, i.e. it will adapt the information to networks with small bandwidth, such as mobile telephone networks, in an optimal way.

The information database will be cheap and easy to establish and operate. Universally accessible programs for databases can be utilised to operate the database.

The database always contains current and up-to-date information by being updated centrally, having small data fields (references) and by that being fast, having possibility to be made optionally reliable because only one party attends to the maintenance of it, and by containing addresses that are seldom updated.

The information can be kept up-to-date by the database only containing pointer to the information proper, which is stored so that it can be accessed via computer networks.

### Showing on map

The information the client has requested for a certain district is geographically coded. The client utilises this to, on the map, place icons that represent different objects (hotels, hospitals etc) in the district. The icons as such are not transmitted to the clients, but only a pointer (addresses) to geo-coded information objects in a computer network, for instance Internet, where the client can derive the icons. The icons are after that derived from the network by the client. By this procedure, the client only needs to handle the coordinates and an address.

If the information is derived via Internet, the pointer is a web address and the icon can be derived by the http-protocol.

The geo-coded pointer also holds an indication that indicates which category of object the icon shall represent (hotel, restaurant etc). If the client experiences that it takes too long time to derive the icon from the network, a standard icon is used, which can be stored locally in the client, for the category in question.

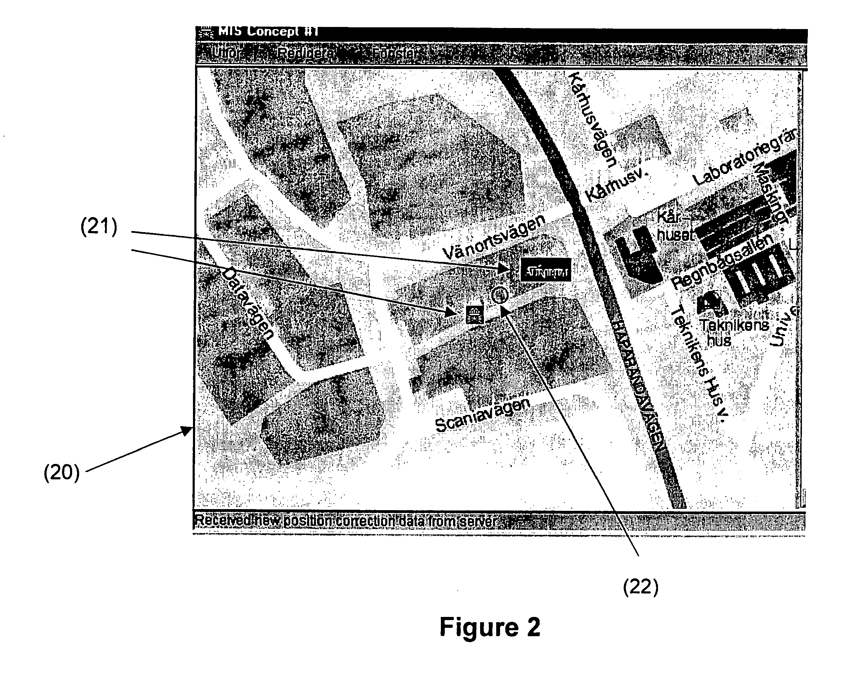

The information, which is based on the data of the navigation list, should best be shown on a map on the client's display unit, at which position in question (22), navigation points and the icons (21) of the navigation objects, appear on the map as the user is moving. See Figure 2. In this way the user will have a graphical navigation aid, which, if it is utilised with mobile communication, can be used during the whole car drive. It is also possible for the user to get further information about the information objects via the associated address information that is included in the navigation list.

The user's position is shown by an indication on the map. By means of, for instance, form or colour of the indication, the user very easily can decide the degree of reliability of the position information. On the map is also indicated in the list indicated icons. Associated with these icons there also is the address of the information that is available to be derived via computer network. At utilisation of Internet, the user can click on the icon, at which the associated web address is utilised to, by means of the HTTP-protocol, derive the stored information. The stored information is automatically shown when the user is approaching the place of the geo-code of the icon.

### The user's perspective

The user starts the client program in his/her terminal, at which a map over the local surrounding is loaded to the client. On the map is shown the user's position and geo-coded information objects that are placed on the map as icons. These can be clicked on, for showing information objects to which the icon refers, and/or these information objects are shown automatically, depending on how far from these virtual objects the user is. Examples of information objects can be restaurants, roadwork, navigation information, cash dispensers etc.

### Client application

The user is equipped with a terminal (client computer, for instance an ordinary, portable computer), which should best be equipped with functionality for positioning (for instance GPS) and access to Internet, for instance via telephone, preferably mobile telephone, for instance GSM.

The user can manage parts of his/her personal profile directly via the client application, which then is transmitted and stored in the service logic. The advantage of this, instead of storing the profile locally, is that the user can use any mobile terminal with the client program installed and yet have access to his/her personal profile.

### ALTERNATIVE EMBODIMENTS

### Computer networks and positioning

The different parts in the user environment are exchangeable. The user's equipment and utilised programs and systems are adapted to the environment and infrastructure that is utilised. At that can, for instance, other computer networks than Internet be utilised and several different ways to handle the user's position are possible, such as other positioning systems, or manual position registration.

### Adaptation

The invention describes a method with great flexibility by icons and positioning following the real route that the user is moving along. It is possible to, in advance, plan a journey and get the information shown by manually entering position and movements.

Further, the route is shown and to the route related information during the travel proper, and by that the real route will be shown on the display unit, and if it diverges from planned route, specific information can be provided.

At possibility of selection between alternative routes, the method can include guiding for selection of route.

### Navigation at sea

The navigation aid can also be utilised at other navigation than at travelling by car. A support at navigation at sea can guide a seafarer through the best navigable channel. If the navigation aid utilises supplementing information such as draught, height of mast, point of time for opening of bridges, and passing through locks, as well as weather conditions, a good support can be obtained for an efficient selection of route.

The navigation aid can also be used as an automatic pilot.

### SCENARIOS

A firm of haulage contractors may have an assignment to deliver goods to different places to which it can be difficult to find the route even with good knowledge of the district. It can be worth a lot to, in a simple way, show the customer's address and enclose a description of the route in form of a navigation list. For the firm of haulage contractors the object is to deliver the goods quickly, and then it is important to have access to an up-to-date description of the route.

If the navigation aid is kept well updated, also road and traffic conditions can constitute a good support for transports also in districts where the driver has good knowledge of the road network.

Since the map image can be updated continuously, it is possible that police and the public authority that is responsible for the road also utilises this means to distribute acute information about traffic and road conditions, closed roads or other conditions that influence accessibility and risks. This can be of special value at heavy transports in districts where the road conditions can be different, for instance in connection with the thawing of the frozen soil.

Traffic supervising organisations can distribute information about existing traffic and in that way provide a support that makes the traffic better running. The navigation aid then will be a considerably better medium than the traffic information that today is provided by radio.

The invention is not limited to above shown embodiments but can, in addition, be subject to modifications within the frame of the following patent claims.

## Claims

1. A navigation aid, which is arranged to specify and continuously update a recommended route between two or more geographically indicated points on a display unit at a client equipment (33) which is arranged to communicate with a service server (35) via a wireless communications system (37), said service server (35) having access to a database (34) with geographical data necessary to indicate the recommended route, and said navigation aid being arranged to appoint information objects by means of an icon (21) which is displayable on the client's display unit,
said navigation aid being arranged to appoint, together with said specification of a recommended route, said information objects in connection with the recommended route and related to a geographical district, and
provide, together with said appointing of information objects, a first pointer to one storing place arranged in connection with a communications network (31) for further information (35) related to said information objects where said further information (35) is accessible by means of procedures applicable in said communications network (31), **characterised**
**in that** in said database (34) are storable, for each information object, said first pointer and a second pointer to one storing place arranged in connection with a communications network (31) for said icon (32) which symbolises the information object, and
**in that** said second pointer contains data (15) indicating which category the icon shall represent.

2. A navigation aid as claimed in claim 1,
**characterised in that** said first (16) and second pointer (14) consist of addresses to storing places in connection with said communications network.

3. A navigation aid as claimed in claim 1 or 2, **characterised in that** the navigation aid, is arranged to be utilised together with an arrangement arranged to show a map (20) on the client's display unit, and that said recommended route and said icons (21) are displayable on said map.

4. A navigation aid as claimed in any of the claims 1 to 3, **characterised in that** said navigation aid is arranged such that deriving of said further information related to said information object is initiated:
• by the user indicating said icon, for instance by clicking by means of pointer connected to the client equipment or,
• if the information object is connected with an auto-active icon, automatically by the navigation aid when certain conditions are fulfilled, for instance that the client's position is within a certain distance from the geographical position to which the information object is related.

5. A navigation aid as claimed in any of the previous claims, **characterised in that** said further information related to information objects are provided for access by said communications network by content provider, which is independent from service provider, which provides said service server, and that said content provider is a private person, public authority, company, or other organisation.

6. A navigation aid as claimed in any of the previous claims, **characterised in that** a navigation list is transmittable from service server to client by said communication between client and service server, and **in that** said navigation list consists of only one text string, which indicates which icon that shall be used, from where the icon shall be derived, and where the icon shall be shown on the map.

7. A navigation aid as claimed in any of the previous claims, **characterised in that** communication between client, service server and storing places is executable over Internet by means of TCP/IP-protocol, and that a mobile telephone is usable to establish contact with Internet, by the client.

## Patentansprüche

1. Navigationshilfe, die dazu ausgebildet ist, eine empfohlene Route zwischen zwei oder mehr geografisch angezeigten Punkten auf einer Anzeigeeinheit bei einer Kundenausrüstung (33) anzugeben und laufend zu aktualisieren, die dazu ausgebildet ist, mit einem Dienstserver (35) über ein drahtloses Kommunikationssystem (37) zu kommunizieren, welcher Dienstserver (35) Zugang zu einer Datenbank (34) mit geografischen Daten hat, die notwendig sind, die empfohlene Route anzuzeigen, und wobei die Navigationshilfe dazu ausgebildet ist, Informationsobjekte mit Hilfe eines Icons (Symbol)(21) zu bestimmen, das auf der Anzeigeeinheit des Kunden anzeigbar ist,
welche Navigationshilfe dazu ausgebildet ist, zusammen mit der Spezifizierung einer empfohlenen Route die Informationsobjekte in Verbindung mit der empfohlenen Route und bezogen auf ein geografisches Gebiet zu bestimmen und
zusammen mit der Bestimmung von Informationsobjekten einen ersten Zeiger zu einem Speicherplatz, der in Verbindung mit einem Kommunikationsnetz (31) angeordnet ist, für weitere Informationen (35) vorzusehen, die sich auf die Informationsobjekte bezieht, wo die weitere Information (35) mit Hilfe von Prozeduren zugänglich ist, die in dem Kommunikationsnetz (31) anwendbar sind, **dadurch gekennzeichnet,**
**dass** in der Datenbank (34) für jedes Informationsobjekt der erste Zeiger und ein zweiter Zeiger zu einem Speicherplatz, der in Verbindung mit einem Kommunikationsnetz (31) angeordnet ist, für das Icon (32) speicherbar sind, der das Informationsobjekt symbolisiert, und
**dass** der zweite Zeiger Daten (15) enthält, die anzeigen, welche Kategorie das Icon darstellen soll.

2. Navigationssystem nach Anspruch 1, **dadurch gekennzeichnet, dass** der erste (16) und der zweite Zeiger (14) aus Adressen zu Speicherplätzen in Verbindung mit dem Kommunikationsnetz bestehen.

3. Navigationshilfe nach Anspruch 1 oder 2, **dadurch gekennzeichnet, dass** die Navigationshilfe dazu ausgebildet ist, zusammen mit einer Anordnung benutzt zu werden, die dazu ausgebildet ist, eine Karte (20) auf der Anzeigeeinheit des Kunden zu zeigen, und dass die empfohlene Route und die Icons (21) auf der Karte anzeigbar sind.

4. Navigationshilfe nach einem der Ansprüche 1 bis 3, **dadurch gekennzeichnet, dass** die Navigationshilfe so ausgebildet ist, dass Ableitung der weiteren Information, die sich auf das Informationsobjekt bezieht, eingeleitet wird:
- durch den Benutzer, der das Icon anzeigt, z. B. durch Klicken mit Hilfe eines Zeigers, der mit der Kundenausrüstung verbunden ist, oder
- wenn das Informationsobjekt mit einem selbstaktiven Icon verbunden ist, automatisch durch die Navigationshilfe, wenn gewisse Bedingungen erfüllt sind, z. B., dass die Position des Kunden innerhalb einer gewissen Entfernung von der geografischen Position ist, auf die sich das Informationsobjekt bezieht.

5. Navigationshilfe nach einem der vorangehenden Ansprüche, **dadurch gekennzeichnet, dass** die weitere Information, die sich auf Informationsobjekte bezieht, für Zugang durch das Kommunikationsnetz durch einen Inhaltsanbieter zur Verfügung gestellt wird, der unabhängig vom Dienstanbieter ist, der den Dienstserver zur Verfügung stellt, und dass der Inhaltsanbieter eine Privatperson, öffentliche Behörde, ein Unternehmen oder eine andere Organisation ist.

6. Navigationshilfe nach einem der vorangehenden Ansprüche, **dadurch gekennzeichnet, dass** eine Navigationsliste von dem Dienstserver zum Kunden durch Kommunikation zwischen Kunde und Dienstserver übertragbar ist und dass die Navigationsliste aus nur einer Textzeichenkette besteht, die anzeigt, welches Icon benutzt werden soll, von wo das Icon abgeleitet werden soll und wo das Icon auf der Karte gezeigt werden soll.

7. Navigationshilfe nach einem der vorangehenden Ansprüche, **dadurch gekennzeichnet, dass** Kommunikation zwischen Kunde, Dienstserver und Speicherplätzen über Internet mit Hilfe des TCP/IP-Protokolls ausführbar ist, und dass ein Mobiltelefon durch den Kunden verwendbar ist, um Kontakt mit dem Internet einzurichten.

## Revendications

1. Système d'aide à la navigation, qui est agencé pour spécifier et mettre continuellement à jour une route recommandée entre deux points géographiquement indiqués, ou davantage, sur une unité d'affichage d'un équipement de client (33) qui peut communiquer avec un serveur de service (35) via un système de communication sans fil (37), le dit serveur de service (35) ayant accès à une base de données (34) contenant des données géographiques nécessaires pour indiquer la route recommandée, et le dit système d'aide à la navigation étant agencé pour désigner des objets d'information au moyen d'une icône (21) qui est affichable sur l'unité d'affichage du client,
le dit système d'aide à la navigation étant agencé de manière à :
indiquer, en même temps que la dite spécification d'une route recommandée, les dits objets d'information associés à la route recommandée et relatifs à un district géographique, et
fournir, en même temps que la dite indication d'objets d'information, un premier pointeur à un endroit de stockage agencé en connexion avec un réseau de communication (31) pour des informations supplémentaires (35) liées aux dits objets d'information lorsque les dites informations supplémentaires (35) sont accessibles au moyen de procédures applicables dans le dit réseau de communication (31),
**caractérisé en ce que**
dans la dite base de données (34), on peut stocker, pour chaque objet d'information, le dit premier pointeur et un deuxième pointeur à un endroit de stockage agencé en connexion avec un réseau de communication (31) pour la dite icône (32) qui symbolise l'objet d'information, et
le dit deuxième pointeur contient des données (15) indiquant la catégorie que l'icône doit représenter.

2. Système d'aide à la navigation selon la revendication 1, **caractérisé en ce que** le dit premier pointeur (16) et le dit deuxième pointeur (14) consistent en adresses à des endroits de stockage en connexion avec le dit réseau de communication.

3. Système d'aide à la navigation selon la revendication 1 ou 2, **caractérisé en ce que** le système d'aide à la navigation est prévu pour être utilisé en même temps qu'un dispositif agencé pour représenter une carte (20) sur l'unité d'affichage du client, et **en ce que** la dite route recommandée et les dites icônes (21) sont affichables sur la dite carte.

4. Système d'aide à la navigation selon une quelconque des revendications 1 à 3, **caractérisé en ce que** le dit système d'aide à la navigation est agencé de sorte que l'obtention des dites informations supplémentaires liées au dit objet d'information est déclenchée :
par l'utilisateur qui indique la dite icône, par exemple en cliquant au moyen d'un pointeur connecté à l'équipement du client, ou bien,
si l'objet d'information est connecté à une icône auto-active, automatiquement par le système d'aide à la navigation lorsque certaines conditions sont remplies, par exemple lorsque la position du client est à l'intérieur d'une certaine distance par rapport à la position géographique à laquelle l'objet d'information est lié.

5. Système d'aide à la navigation selon une quelconque des revendications précédentes, **caractérisé en ce que** les dites informations supplémentaires liées à des objets d'information sont prévues pour accès par le dit réseau de communication par le fournisseur de contenu, qui est indépendant du fournisseur de service, qui fournit le dit serveur de service, et **en ce que** le dit fournisseur de contenu est une personne privée, un organisme public, une société ou une autre organisation.

6. Système d'aide à la navigation selon une quelconque des revendications précédentes, **caractérisé en ce qu'**une liste de navigation peut être transmise du serveur de service au client par la dite communication entre client et serveur de service, et **en ce que** la dite liste de navigation consiste en une seule chaîne de texte, qui indique l'icône qui doit être utilisée, d'où l'icône doit provenir, et où l'icône doit être représentée sur la carte.

7. Système d'aide à la navigation selon une quelconque des revendications précédentes, **caractérisé en ce que** la communication entre client, serveur de service et endroits de stockage peut être exécutée sur Internet au moyen d'un protocole TCP/IP, et **en ce que** le client peut utiliser un téléphone mobile pour établir le contact avec Internet.
